# EUROPEAN PATENT SPECIFICATION

(11) **EP 1 292 165 B1**
(45) Date of publication and mention of the grant of the patent: **01.08.2007**
(21) Application number: 01917759.1
(22) Date of filing: 30.03.2001
(51) Int. Cl.: H04Q 7/38, H04L 12/28

(54) **PERSONAL DIGITAL ASSISTANT, WIRELESS COMMUNICATION SYSTEM AND METHOD OF LINK ESTABLISHMENT**
PERSÖNLICHER DIGITALER ASSISTENT, DRAHTLOSES KOMMUNIKATIONSSYSTEM, UND VERFAHREN FÜR DEN VERBINDUNGSAUFBAU
ASSISTANT NUMERIQUE PERSONNEL, SYSTEME DE COMMUNICATION SANS FIL ET PROCEDE D'ETABLISSEMENT DES LIAISONS

(43) Date of publication of application: 12.03.2003
(73) Proprietor: MITSUBISHI DENKI KABUSHIKI KAISHA, Chiyoda-ku Tokyo 100-8310 (JP)
(72) Inventor: MORIMOTO, Hiroyuki, c/o MITSUBISHI DENKI K.K., Tokyo 100-8310 (JP)
(74) Representative: Bohnenberger, Johannes
(86) International application number: PCT/JP2001/002829
(87) International publication number: WO 2002/082851

(56) References cited:
- EP-A- 1 024 628
- JP-A- 2001 045 029
- NUSSER R ET AL: "Bluetooth-based wireless connectivity in an automotive environment" VEHICULAR TECHNOLOGY CONFERENCE, 2000. IEEE VTS FALL VTC 2000. 52ND SEPT. 24-28, 2000, PISCATAWAY, NJ, USA,IEEE, 24 September 2000 (2000-09-24), pages 1935-1942, XP010524360 ISBN: 0-7803-6507-0

## Description

### TECHNICAL FIELD

The present invention relates to a personal digital assistant, a radio communication system and a method of establishing a bluetooth link.

### BACKGROUND ART

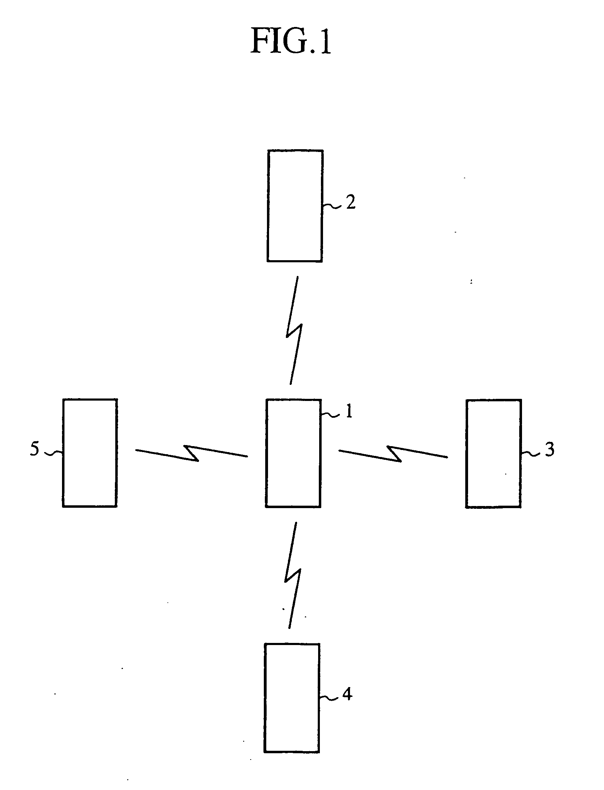

Fig. 1 is a block diagram showing the configuration of a conventional radio communication system.

Referring to Fig. 1, reference numeral 1 denotes a portable telephone as a personal digital assistant, and reference numerals 2 to 5 stationary terminals (access points) installed in the environs of the portable telephone 1.

Next, the operation of the conventional radio communication will be described.

For example, when a user tries to manipulate the stationary terminal 5 by the use of the portable telephone 1, a bluetooth link is established between the portable telephone 1 and the stationary terminal 5.

More specifically, in the case of establishing the bluetooth link, the portable telephone 1 transmits an address request signal called "Inquiry."

Upon receiving the address request signal transmitted from the portable telephone 1, the stationary terminals 2 to 5 transmit their unique device addresses "DeviceA" to "DeviceD" to the portable telephone 1.

Upon receiving the device addresses from the stationary terminals 2 to 5, the portable telephone 1 performs first a page sequence defined in Specification of the Bluetooth System for the stationary terminal 2, thereby confirming their mutual device addresses and establishing the bluetooth link between them.

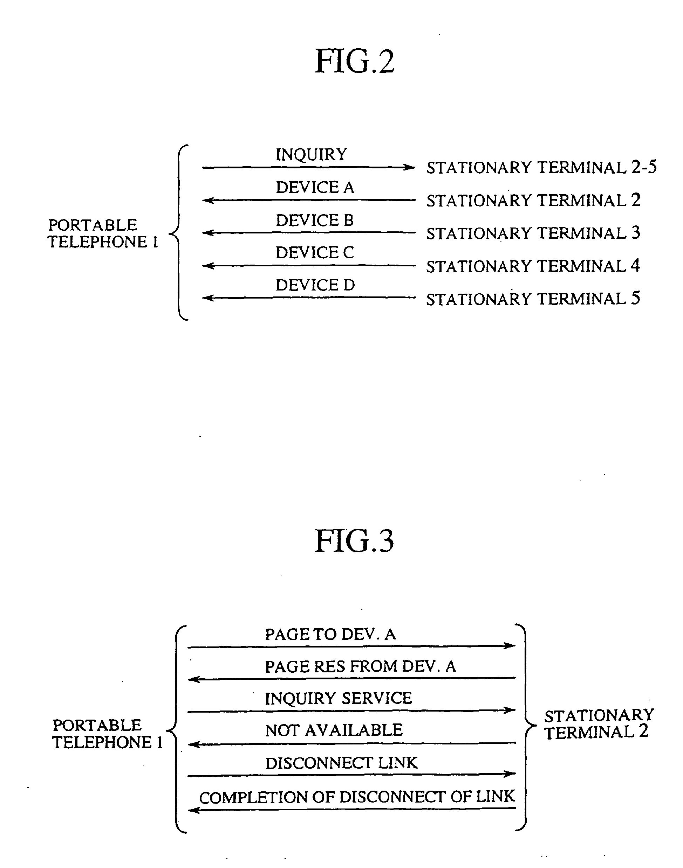

Then, the portable telephone 1 makes a check to see if the stationary terminal 2 offers a user's desired service (the service of the stationary terminal 5), and if the check proved that the desired service cannot available, the portable telephone disconnects the bluetooth link (see Fig. 3).

The portable telephone 1 similarly establishes the bluetooth link with each of the stationary terminals 3 and 4, but since the stationary terminals 3 and 4 cannot offer the desired service in this example, the portable telephone disconnects the bluetooth link.

Next, the portable telephone 1 similarly establishes the bluetooth link with the stationary terminals. In this example, since the stationary terminal 5 offers the desired service, the portable telephone holds on the bluetooth link.

In addition to the above prior art, a technique is disclosed in Japanese Pat. Appln. No. 2000-224197A, which introduces a new apparatus into a radio local area network.

However, such a technique is concerned strictly with the construction of a radio local area network and is not intended to interconnect two devices by the bluetooth link.

The conventional radio communication system thus configured as described above constrains the conventional system to check every stationary terminal having sent back its device address as to whether the stationary terminal renders the desired service. Hence, this retards speedy radio communications with the desired stationary terminal 5.

The present invention has been made to solve the above problem and an object thereof is to provide a personal digital assistant, a radio communication system and a method of establishing link which enables speedy radio communications with a desired access point.

R. Nüsser et alia, "Bluetooth-based wireless connectivity in an automotive environment", IEEE, 2000, discloses an access point AP automatically connecting to known devices by comparing device addresses of discovered devices with known addresses stored in its device database.

EP 1024 628 A1 discloses a wireless local area network, also including bluetooth technology and PDA devices, with a device maintaining a record with information about services and a list of identifiers about service providing devices.

### DISCLOSURE OF THE INVENTION

A personal digital assistant according to the present invention is given in claim 1, and includes
(a) storage means for previously receiving from an access point management device, device addresses of access points offering a desired service, each of which is responsible for permission to establish a bluetooth link and for storing therein the received device addresses;
(b) transmitting means for transmitting an address request signal;
(c) receiving means for receiving unique device addresses sent from at least one or more access points in response to said address request signal;
(d) collating means for collating the device addresses previously stored in said storage means with the unique device addresses received by said receiving means thereby detecting a match of the device addresses; and
(e) link establishing means for establishing a bluetooth link with one of the access points by the use of the matched device addresses collated by said collating means.

With this arrangement, it is possible to quickly carry out radio communications with a desired access point.

The personal digital assistant according to the present invention properly updates the device addresses stored in the storage means. This enables the storage means to hold the latest device addresses.

The personal digital assistant according to the present invention establishes a bluetooth link with an access point by performing the page sequence defined in Specification of the Bluetooth System.

This facilitates establishment of the bluetooth link.

A radio communication system according to the present invention is provided by the system in claim 3, and comprises:
(a) an access point management device which comprises means to manage access points offering a desired service, each of which is responsible for permission to establish a bluetooth link, and means to transmit device addresses of the access points;
(b) storage means for receiving and storing therein the device addresses sent from said access point management device;
(c) transmitting means for transmitting an address request signal;
(d) receiving means for receiving unique device addresses sent from at least one or more access points in response to said address request signal;
(e) collating means for collating the device addresses previously stored in said storage means with the unique device addresses received by said receiving means, thereby detecting a match of the device addresses; and
(f) link establishing means for establishing a bluetooth link with one of the access points by the use of the matched device addresses collated by said collating means.

This makes it possible to quickly carry out radio communications with a desired access point.

In the radio communication system according to the present invention the access point is a stationary terminal.

This makes it possible to establish the bluetooth link with the stationary terminal.

In the radio communication system according to the present invention the access point is a personal digital assistant.

This makes it possible to establish the bluetooth link with the personal digital assistant.

A method of establishing a link according to the present invention is given in claim 6. A method of establishing a bluetooth link comprises the steps of:
(a) previously receiving from an access point management device, device addresses of access points offering a desired service, each of which is responsible for permission to establish a bluetooth link and storing the received device addresses in storage means;
(b) transmitting an address request signal;
(c) receiving unique device addresses sent from at least one or more access points in response to said address request signal;
(d) collating the device addresses previously stored in said storage means with the received unique device addresses, thereby detecting a match of the device addresses; and
(e) establishing a bluetooth link with one of the access points by the use of the matched device addresses.

This makes it possible to quickly carry out radio communications with a desired access point. The method of establishing link according to the present invention properly updates the previously stored device addresses.
This enables the personal digital assistant to hold the latest device addresses.

### BRIEF DESCRIPTION OF THE DRAWINGS

Fig. 1 is a block diagram showing the configuration of a conventional radio communication system.
Fig. 2 is a sequence diagram showing a device address receiving procedure.
Fig. 3 is a sequence diagram showing a procedure for inquiring a desired service.
Fig. 4 is a block diagram showing a radio communication system according to a first embodiment of the present invention.
Fig. 5 is a flowchart showing a method of establishing link according to a first embodiment.
Fig. 6 is an explanatory diagram showing a device address collating procedure.

### BEST MODE FOR CARRYING OUT THE INVENTION

To facilitate a better understanding of the present invention, a description of the best mode for carrying out the present invention will be given below, with reference to the accompanying drawings.

### FIRST EMBODIMENT

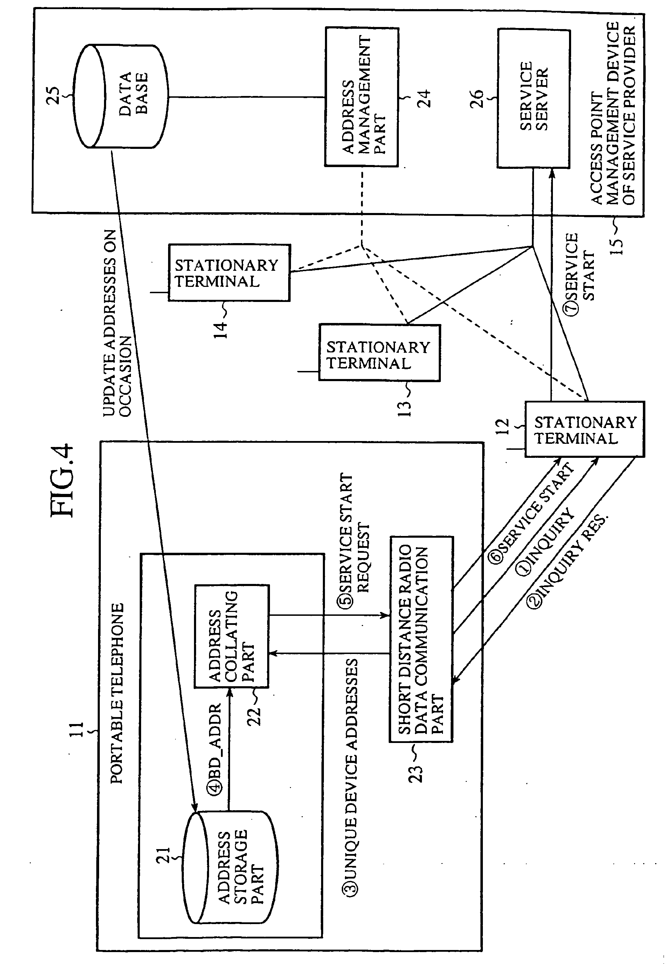

Fig. 4 is a block diagram showing a radio communication system according to the first embodiment of the present invention.

Referring to Fig. 4, reference numeral 11 denotes a portable telephone as a personal digital assistant; reference numerals 12 to 14 stationary terminal (access points) such as vending machines; and reference numeral 15 an access point management device of a service provider which manages the stationary terminal responsible for permission to establish link and transmits its device address BD_ADDR to the portable telephone 11.

Reference numeral 21 denotes an address storage part (storage means) which receives and stores device addresses BD_ADDR sent from the access point management part 15; reference numeral 22 address collating part (collating means) which, when a short distance radio data communication part 23 receives unique device addresses of the stationary terminals 12 to 14, collates the device addresses BD_ADDR stored in the address storage part 21 with the unique device address received by the short distance radio data communication part 23; and reference numeral 23 a short distance radio data communication part (transmitting means, receiving means, link establishing means) which receives the unique device addresses sent from the stationary terminals 12 to 14 and establishes a bluetooth link with one of the stationary terminals by the use of the matched device address collated by the address collating part 22.

Reference numeral 24 denotes an address management part which manages the unique addresses of the stationary terminals; reference numeral 25 a data base which stores therein the unique device addresses of the stationary terminals; and reference numeral 26 a service server which manages services of the stationary terminals 12 to 14.

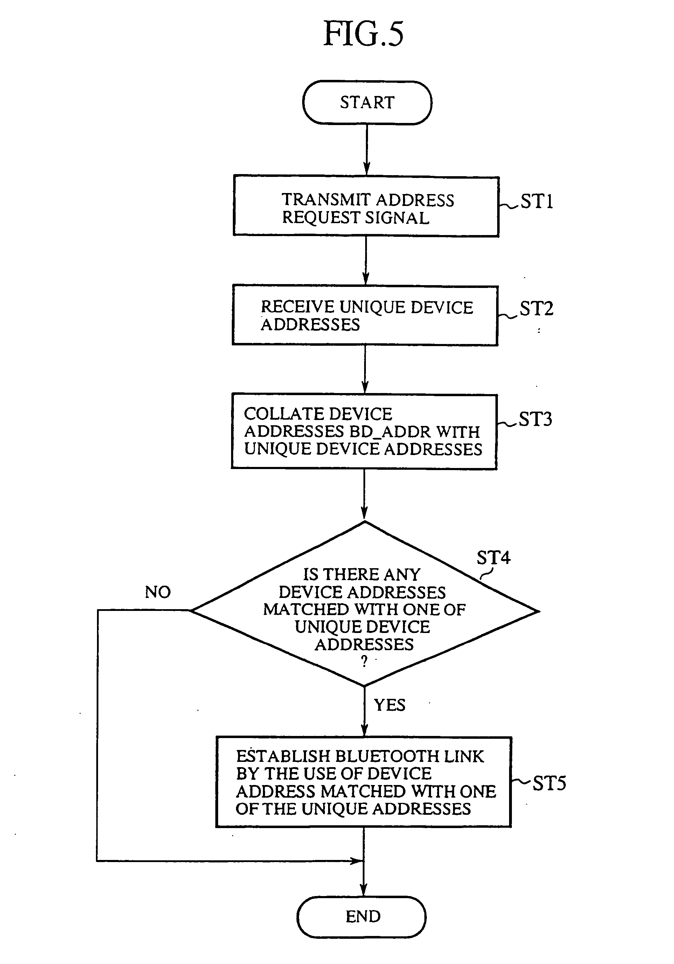

Fig. 5 is a flowchart showing the method of establishing link according to the first embodiment of the present invention.

Next, the operation of the radio communication system of the first embodiment will be described.

For example, when the user manipulates the stationary terminal 12 by the use of the portable telephone 11, he/she interconnects the portable telephone 11 and the stationary terminal 12 via the bluetooth link.

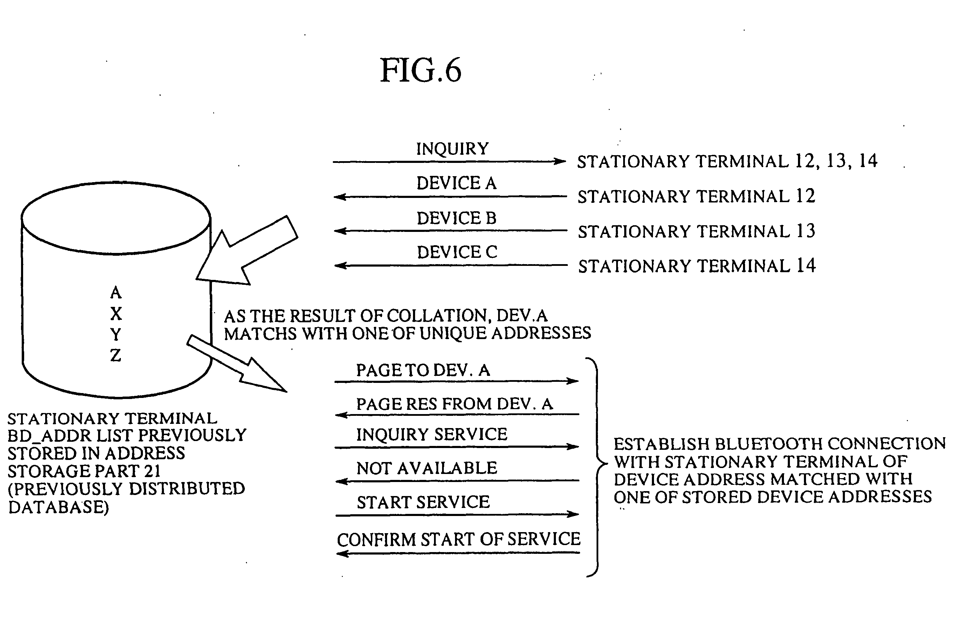

More specifically, in the case of establishing the bluetooth link, the short distance radio data communication part 23 of the portable telephone 11 sends, as shown in Fig. 6, an address request signal called an "Inquiry" (step ST1).

Upon receiving the address request signal from the portable telephone 11, the stationary terminals 12 to 14 sent back their unique device addresses as "DeviceA" to "DeviceC" to the portable telephone 11.

The short distance radio data communication part 23 of the portable telephone 11 receives the unique device addresses sent back from the stationary terminals 12 to 14 (step ST2).

When the short distance radio data communication part 23 receives the unique device addresses of the stationary terminals 12 to 14, the address collating part 22 of the portable telephone 11 collates the device addresses BD_ADDR stored in the address storage part 21 with the unique device addresses received by the short distance radio data communication part 23 (step ST3).

In the embodiment of Fig. 6, the address storage part 21 stores therein device addresses "DeviceA," "DeviceX," "DeviceY" and "DeviceZ," whereas the short distance radio data communication part 23 receives "DeviceA," "DeviceB" and "DeviceC". Hence, only "DeviceA" matches with one of the unique device addresses of the stationary terminals.

When the address collating part 22 detects a match of the device address "DeviceA" as described above (step ST4), the short distance radio data communication part 23 performs the page sequence defined in Specification of the Bluetooth System, thereby mutually confirming the device data of the portable telephone and the stationary terminal 12 of the device address "DeviceA" and establishing the bluetooth line between them (step ST5).

Incidentally, since the stationary terminal 12 offers the desired service, the bluetooth link will be held on.

As is evident from the above, according to the first embodiment, the address collating part 22 is provided which collates the device addresses BD_ADDR stored in the address storage part 21 with the unique device addresses received by the short distance radio data communication part 23, and the bluetooth link is established between the portable telephone and one of the stationary terminals by the use of the matched device address collated by the address collating part 22. This makes it possible to quickly carry out radio communications with a desired stationary terminal.

### SECOND EMBODIMENT

In the first embodiment, the description has been made of the case where the address collating part 22 collates a match of only one device address. Alternatively, even in the case where plural device addresses are match with plural stored device addresses, it is also possible to limit the number of stationary terminals for which a check is made to see if they actually render the desired service. Accordingly, in such a case, too, radio communications with the desired stationary terminal can quickly be carried out.

### THIRD EMBODIMENT

While in the first Embodiment no particular reference has been made thereto, provision may also be made to properly update the device addresses BD_ADDR in the address storage part 21 by the access point management device 15.

This enables the address storage part 21 to hold the latest device addresses BD_ADDR.

### FOURTH EMBODIMENT

While the first Embodiment has been described on the assumption that the access points are the stationary terminals 12 to 14, the access points are not limited specifically thereto, they may also be similar personal digital assistant such as portable telephones.

### INDUSTRIAL APPLICABILITY

As described above, the personal digital assistant, the radio communication system and the method of establishing link according to the present invention enable the bluetooth link to be quickly established without involving time-consuming procedural steps.

## Claims

1. A personal digital assistant **characterized by**:
storage means (21) for previously receiving from an access point management device (15) device addresses of access points offering a desired service, each of which is responsible for permission to establish a bluetooth link and for storing therein the received device addresses;
transmitting means (23) for transmitting an address request signal;
receiving means (23) for receiving unique device addresses sent from at least one or more access points in response to said address request signal;
collating means (22) for collating the device addresses previously stored in said storage means (21) with the unique device addresses received by said receiving means (23) thereby detecting a match of the device addresses; and
link establishing means (23) for establishing a bluetooth link with one of the access points by the use of the matched device addresses collated by said collating means.

2. The personal digital assistant according to claim 1, wherein the storage means (21) updates its stored device addresses.

3. A radio communication system comprising:
an access point management device (15) comprises means to manage access points offering a desired service, each of which is responsible for permission to establish a bluetooth link, and means to transmit device addresses of the access points;
storage means (21) for receiving and storing therein the device addresses sent from said access point management device (15);
transmitting means (23) for transmitting an address request signal;
receiving means (23) for receiving unique device addresses sent from at least one or more access points in response to said address request signal;
collating means (22) for collating the device addresses previously stored in said storage means (21) with the unique device addresses received by said receiving means (23), thereby detecting a match of the device addresses; and
link establishing means (23) for establishing a bluetooth link with one of the access points by the use of the matched device addresses collated by said collating means (22).

4. The radio communication system according to claim 3, wherein the access points are stationary terminals.

5. The radio communication system according to either claims 3 or 4, wherein the access points are personal digital assistant.

6. A method of establishing a bluetooth link comprising the steps of:
previously receiving from an access point management device (15) device addresses of access points offering a desired service, each of which is responsible for permission to establish a bluetooth link and storing the received device addresses in storage means (21);
transmitting an address request signal;
receiving unique device addresses sent from at least one or more access points in response to said address request signal;
collating the device addresses previously stored in said storage means (21) with the received unique device addresses, thereby detecting a match of the device addresses; and
establishing a bluetooth link with one of the access points by the use of the matched device addresses.

7. The method of establishing a bluetooth link according to claim 6, the previously stored device addresses are updated.

## Patentansprüche

1. Persönlicher digitaler Assistent bzw. PDA, **gekennzeichnet durch**:
Speichereinrichtungen (21), um von einer Zugangspunkt- Managementeinrichtung (15) Einrichtungsadressen von Zugangspunkten im Voraus zu empfangen, die einen gewünschten Dienst anbieten und von denen jeder dafür zuständig ist, die Herstellung einer Bluetooth-Verbindung zu gestatten und die empfangenen Einrichtungsadressen darin zu speichern;
Sendeeinrichtungen (23) zum Senden eines Adressenanforderungssignals;
Empfangseinrichtungen (23) zum Empfangen von eindeutigen Einrichtungsadressen, die von mindestens einem oder mehreren Zugangspunkten als Reaktion auf das Adressenanforderungssignal gesendet werden;
Vergleichseinrichtungen (22) zum Vergleichen der in den Speichereinrichtungen (21) vorher gespeicherten Einrichtungsadressen mit den von den Empfangseinrichtungen (23) empfangenen eindeutigen Einrichtungsadressen, um **dadurch** eine Übereinstimmung der Einrichtungsadressen zu detektieren; und
Verbindungsherstellungseinrichtungen (23) zum Herstellen einer Bluetooth-Verbindung mit einem der Zugangspunkte **durch** die Verwendung der von der Vergleichseinrichtung verglichenen übereinstimmenden Einrichtungsadressen.

2. PDA nach Anspruch 1, wobei die Speichereinrichtungen (21) ihre gespeicherten Einrichtungsadressen aktualisieren.

3. Funksystem, das Folgendes aufweist:
eine Zugangspunkt-Managementeinrichtung (15), die aufweist: Einrichtungen zum Managen von Zugangspunkten, die einen gewünschten Dienst anbieten und von denen jeder dafür zuständig ist, die Herstellung einer Bluetooth-Verbindung zu gestatten, und Einrichtungen zum Senden von Einrichtungsadressen der Zugangspunkte;
Speichereinrichtungen (21), um die von der Zugangspunkt-Managementeinrichtung (15) gesendeten Einrichtungsadressen zu empfangen und darin zu speichern;
Sendeeinrichtungen (23) zum Senden eines Adressenanforderungssignals;
Empfangseinrichtungen (23) zum Empfangen von eindeutigen Einrichtungsadressen, die von mindestens einem oder mehreren Zugangspunkten als Reaktion auf das Adressenanforderungssignal gesendet werden;
Vergleichseinrichtungen (22) zum Vergleichen der in den Speichereinrichtungen (21) vorher gespeicherten Einrichtungsadressen mit den von den Empfangseinrichtungen (23) empfangenen eindeutigen Einrichtungsadressen, um **dadurch** eine Übereinstimmung der Einrichtungsadressen zu detektieren; und
Verbindungsherstellungseinrichtungen (23) zum Herstellen einer Bluetooth-Verbindung mit einem der Zugangspunkte durch die Verwendung der von den Vergleichseinrichtungen (22) verglichenen übereinstimmenden Einrichtungsadressen.

4. Funksystem nach Anspruch 3, wobei die Zugangspunkte stationäre Endgeräte sind.

5. Funksystem nach einem der Ansprüche 3 oder 4, wobei die Zugangspunkte PDAS sind.

6. Verfahren zum Herstellen einer Bluetooth-Verbindung, das die folgenden Schritte aufweist:
vorheriges Empfangen von Einrichtungsadressen von Zugangspunkten, die einen gewünschten Dienst anbieten, von einer Zugangspunkt-Managementeinrichtung (15), wobei jeder Zugangspunkt dafür zuständig ist, die Herstellung einer Bluetooth-Verbindung zu gestatten und die empfangenen Einrichtungsadressen in den Speichereinrichtungen (21) zu speichern;
Senden eines Adressenanforderungssignals;
Empfangen von eindeutigen Einrichtungsadressen, die von mindestens einem oder mehreren Zugangspunkten als Reaktion auf das Adressenanforderungssignal gesendet werden;
Vergleichen der in den Speichereinrichtungen (21) vorher gespeicherten Einrichtungsadressen mit den empfangenen eindeutigen Einrichtungsadressen, um **dadurch** eine Übereinstimmung der Einrichtungsadressen zu detektieren; und
Herstellen einer Bluetooth-Verbindung mit einem der Zugangspunkte durch die Verwendung der übereinstimmenden Einrichtungsadressen.

7. Verfahren zum Herstellen einer Bluetooth-Verbindung nach Anspruch 6, wobei die vorher gespeicherten Einrichtungsadressen aktualisiert werden.

## Revendications

1. Assistant numérique personnel **caractérisé par** :
des moyens de stockage (21) pour recevoir précédemment en provenance d'un dispositif de gestion de point d'accès (15), des adresses de dispositif de points d'accès offrant un service désiré, chacun d'eux étant responsable de la permission d'établir une liaison bluetooth et du stockage à l'intérieur des adresses de dispositif reçues ;
des moyens de transmission (23) pour transmettre un signal de demande d'adresse ;
des moyens de réception (22) pour recevoir des adresses uniques de dispositif envoyées par un au moins, ou plusieurs points d'accès, en réponse audit signal de demande d'adresse ;
des moyens de collationnement (22) pour collationner les adresses de dispositif stockées précédemment dans lesdits moyens de stockage (21) avec les adresses uniques de dispositif reçues par lesdits moyens de réception (23) en détectant de ce fait une correspondance des adresses de dispositif ; et
des moyens d'établissement de liaison (23) pour établir une liaison bluetooth avec l'un des points d'accès en utilisant les adresses de dispositif mises en correspondance collationnées par lesdits moyens de collationnement.

2. Assistant numérique personnel selon la revendication 1, dans lequel les moyens de stockage (21) mettent à jour ses adresses de dispositif stockées.

3. Système de radiocommunication comprenant :
un dispositif de gestion de point d'accès (15) qui comprend des moyens pour gérer des points d'accès qui offrent un service désiré, chacun d'eux étant responsable de la permission d'établir une liaison bluetooth, et des moyens pour transmettre les adresses de dispositif des points d'accès ;
des moyens de stockage (21) pour recevoir et stocker à l'intérieur les adresses de dispositif envoyées par ledit dispositif de gestion de point d'accès (15) ;
des moyens de transmission (23) pour transmettre un signal de demande d'adresse ;
des moyens de réception (22) pour recevoir des adresses uniques de dispositif envoyées par un au moins, ou plusieurs points d'accès, en réponse audit signal de demande d'adresse ;
des moyens de collationnement (22) pour collationner les adresses de dispositif stockées précédemment dans lesdits moyens de stockage (21) avec les adresses uniques de dispositif reçues par lesdits moyens de réception (23) en détectant de ce fait une correspondance des adresses de dispositif ; et
des moyens d'établissement de liaison (23) pour établir une liaison bluetooth avec l'un des points d'accès en utilisant les adresses de dispositif mises en correspondance collationnées par lesdits moyens de collationnement (22).

4. Système de radiocommunication selon la revendication 3, dans lequel les points d'accès sont des terminaux fixes.

5. Système de radiocommunication selon l'une quelconque des revendications 3 ou 4, dans lequel les points d'accès sont des assistants numériques personnels.

6. Procédé d'établissement d'une liaison bluetooth comprenant les étapes consistant à :
recevoir précédemment en provenance d'un dispositif de gestion de point d'accès (15), des adresses de dispositif de points d'accès offrant un service désiré, chacun d'eux étant responsable de la permission d'établir une liaison bluetooth et stocker les adresses de dispositif reçues dans des moyens de stockage (21) ;
transmettre un signal de demande d'adresse ;
recevoir des adresses uniques de dispositif envoyées par un au moins, ou plusieurs points d'accès, en réponse audit signal de demande d'adresse ;
collationner les adresses de dispositif stockées précédemment dans lesdits moyens de stockage (21) avec les adresses uniques de dispositif reçues, en détectant de ce fait une correspondance des adresses de dispositif ; et
établir une liaison bluetooth avec l'un des points d'accès en utilisant les adresses de dispositif mises en correspondance.

7. Procédé d'établissement d'une liaison bluetooth selon la revendication 6, dans lequel les adresses de dispositif stockées précédemment sont mises à jour.
